# EUROPÄISCHE PATENTSCHRIFT

(11) **EP 0 296 540 B1**
(45) Veröffentlichungstag und Bekanntmachung des Hinweises auf die Patenterteilung: **17.02.1993**
(21) Anmeldenummer: 88109871.9
(22) Anmeldetag: 21.06.1988
(51) Int. Cl.: C09D 5/08

(54) **Beschichtungszusammensetzungen für Aluminium und Aluminiumlegierungen und deren Verwendung**
Coating compositions for aluminium and aluminium alloys and the use tereof
Compositions de revètement pour aluminium et alliages d'aluminium et son utilisation

(30) Priorität: 24.06.1987 DE 3720779
(43) Veröffentlichungstag der Anmeldung: 28.12.1988
(73) Patentinhaber: Herberts Gesellschaft mit beschränkter Haftung, 42285 Wuppertal (DE)
(72) Erfinder: Becker, Heinz Dietholf, D-5300 Bonn 1 (DE); Sadowski, Fritz, Dr., D-5024 Brauweiler bei Köln (DE); Stephan, Werner, D-5600 Wuppertal 1 (DE)
(74) Vertreter: Türk, Gille, Hrabal, Leifert

(56) Entgegenhaltungen:
- EP-A- 0 028 290
- EP-A- 0 275 071

## Beschreibung

Die Erfindung betrifft Beschichtungszusammensetzungen für Aluminium und Aluminiumlegierungen mit einem Bindemittel auf der Basis von Polyvinylbutyral und Phenolharz. Die Erfindung betrifft auch die Verwendung dieser Beschichtungszusammensetzung für die Beschichtung, insbesondere die Grundierung von Aluminium und Aluminiumlegierungen.

W. Lampe beschreibt in Kunstharz-Nachrichten (Hoechst), Nr. 4, November 1973, Seiten 7 bis 11, Shop-Primer und Wash-Primer für den Korrosionsschutz von Eisenoberflächen auf der Basis von Polyvinylbutyral und säurehärtenden Phenolharzen, die rostschützende Chromate enthalten. Derartige Anstrichmittel enthalten als weitere Komponente auf die Metalloberfläche einwirkende Orthophosphorsäure, die zu einer Passivierung von Stahloberflächen führt.

Da chromathaltige Pigmente und Überzugsmittel, die derartige Pigmente enthalten, stark toxisch sind und somit zu Problemen bei der Verarbeitung sowie zu Umweltschutz-Problemen führen, wurde nach chromatfreien Anstrichmitteln für den Korrosionsschutz von eisenhaltigen Oberflächen gesucht. So werden in der DE-A-28 40 820 phosphorhaltige Korrosionsschutzpigmente beschrieben, die Salze auf der Basis von Phosphor-Sauerstoffverbindungen verschiedenster Metalle enthalten und in Lacken auf Alkydharz-Basis verwendet werden können. Die DE-A-28 49 712, 29 16 029 und 29 40 695 beschreiben die Herstellung von Korrosionsschutzpigmenten für Oberflächen von Eisen und Eisenlegierungen, bei denen es sich um Mischungen sekundärer Phosphate von Calcium und Magnesium bzw. um entsprechende Mischkristallisate handelt. Derartige Salze werden in Bindemittel auf Alkydharz-Basis eingearbeitet.

Oberflächen von Aluminium und Aluminiumlegierungen, insbesondere Hartaluminium-Typen, wie sie beispielsweise für Koffer-, Tank-, Muldenfahrzeuge und Fahrzeuge, bei denen Aluminiumbordwände verwendet werden, werden bisher nach wie vor mit chromathaltigen, insbesondere Zinkchromathaltigen Säureprimern auf der Basis von Polyvinylbutyral grundiert. Es hat sich gezeigt, daß es bisher notwendig war, derartige Untergründe mit solchen chromathaltigen Grundierungsmitteln zu applizieren, um im Lackieraufbau Blasenbildung, Abplatzungen und Unterwanderungen zu vermeiden.

Bei den Arbeiten zur Bereitstellung der erfindungsgemäßen Beschichtungszusammensetzungen wurde gefunden, daß es nicht möglich war, in den bisher für Aluminiumoberflächen und Hartaluminiumoberflächen verwendeten Grundierungsmitteln Zinkchromat durch Phosphate, wie die vorstehend für den Korrosionsschutz von Eisenoberflächen verwendeten sekundären Calcium-, Zink- und Magnesiumphosphate zu ersetzen. Wird dies versucht, so ergeben sich unter Verwendung der konventionellen Systeme Probleme, wie Blasenbildung, Abplatzen und Unterwanderungen, die an den Aluminiumoberflächen sowie insbesondere auch an Problemstellen, wie Nieten, bei Kofferaluminium, Nut und Feder bei Bordwänden auftreten. Für derartige Zwecke mußten daher, wie erwähnt, chromathaltige Grundierungen, insbesondere Zinkchromat enthaltende Grundierungen verwendet werden. Voraussichtlich beruht die Wirkung derartiger konventioneller chromathaltiger Grundierungen auf der Bildung von Komplexen aus Polyvinylbutyral, Zinktetraoxychromat/Zinkchromat und Phosphorsäure.

Aufgabe der vorliegenden Erfindung ist daher die Bereitstellung von Beschichtungszusammensetzungen, die für den Korrosionsschutz der Oberfläche von Aluminium und Aluminiumlegierungen geeignet sind, keine Chromate enthalten und frei von den vorstehenden Nachteilen sind.

Es wurde gefunden, daß diese Aufgabe durch Beschichtungszusammensetzungen gelöst werden kann, die neben einer Polyvinylbutyral-Phenolharzbasis als Korrosionsschutzpigmente eine homogene Mischung und/oder ein Mischkristallisat von Calciumhydrogenphosphat und Magnesiumhydrogenphosphat, gegebenenfalls zusammen mit Zinkoxid enthalten. Gegenstand der Erfindung sind daher die nachstehend beschriebenen Beschichtungszusammensetzungen und deren Verwendung zur Beschichtung von Aluminium und Aluminiumlegierungen.

Die erfindungsgemäßen Beschichtungszusammensetzungen enthalten, sofern sie lediglich auf Polyvinylbutyral und Phenolharz beruhen, 40 bis 60 Gew.-% Polyvinylbutyral und 60 bis 40 Gew.-% Phenolharz. Hier werden besonders bevorzugt nicht plastifizierte härtbare Phenolharze verwendet, wie sie beispielsweise nachstehend beschrieben werden. In diesem Fall liegt der Anteil von Calciumhydrogenphosphat/Magnesiumhydrogenphosphat (im folgenden als Aktivpigment bezeichnet) sowie Zinkoxyd bei 12 bis 50 Gew.-%, bezogen auf die Gesamtrezeptur.

Bei einem Gehalt an Nitrocellulose und Carbamidsäureester weisen die erfindungsgemäßen Beschichtungsmittelzusammensetzungen folgende Zusammensetzung auf:
45 bis 55 Gew.-% Polyvinylbutyral,
20 bis 30 Gew.-% Phenolharz, (bevorzugt von nicht plastifizierten härtbaren Typ)
10 bis 15 Gew.-% Nitrocellulose und
5 bis 10 Gew.-% Carbamidsäureester,
wobei sich die Prozentangaben auf 100 Gew.-% addieren. In diesem Falle ist neben dem vorstehend definiertem Aktivpigment auch Zinkoxyd im Korrosionsschutzpigment enthalten. Die Gesamtmenge an Korrosionsschutzpigment, bezogen auf die Gesamtrezeptur, beträgt 5 bis 30 Gew.-%.

Enthalten die erfindungsgemäßen Beschichtungsmittelzusammensetzungen zusätzlich Epoxidharz, so liegt ihre Zusammensetzung bei 53 bis 61,5 Gew.-% Polyvinylbutyral, 12 bis 15,5 Gew.-% Phenolharz (von nicht plastifizierten härtbaren Typ oder bevorzugt vom Novolaktyp) und 18 bis 23 Gew.-% Epoxidharz. Diese Prozentangaben addieren sich auf 100 Gew.-%. Bevorzugt enthält eine epoxidhaltige Bindemittelzusammensetzung kein Zinkoxyd. Die Menge an Aktivpigment beträgt 2 bis 5 Gew.-%, bezogen auf die Gesamtrezeptur.

Die erfindungsgemäßen Beschichtungsmittelzusammensetzungen können auch ein Alkydharz, insbesondere ein Ricinenalkydharz enthalten. Beispiele für derartige Alkydharze sind solche wie sie für schnellhärtende Einbrennlacke bzw. Grundierungen und säurehärtende Lacke üblich sind. Bevorzugt handelt es sich um Harze auf der Basis von Ricinenöl und Phthalsäureanhydrid. Ein günstiges Handelsprodukt, das erfindungsgemäß z.B. eingesetzt werden kann, ist das ALFTALAT AR 300,® wie es im Technischen Merkblatt "Kunstharze Hoechst", Ausgabe November 1981, beschrieben wird. Eine solche Beschichtungsmittelzusammensetzung enthält neben 35 bis 40 Gew.-% Polyvinylbutyral, 8 bis 10 Gew.-% Phenolharz, (bevorzugt vom Novolaktyp) 12 bis 15 Gew.-% Epoxidharz noch 40 bis 45 Gew.-% Alkydharz, wobei sich diese Prozentangaben auf 100 % addieren, sowie 2 bis 5 Gew.-% bezogen auf die Gesamtrezepteur, einer homogenen Mischung und/oder eines Mischkristallisats von Calciumhydrogenphosphat und Magnesiumhydrogenphosphat.

Bei den in der erfindungsgemäßen Beschichtungszusammensetzungen verwendeten Korrosionsschutzpigmenten handelt es sich um eine homogene Mischung und/oder um ein Mischkristallisat von Calciumhydrogenphosphat und Magnesiumhydrogenphosphat. Es können beispielsweise solche Gemische oder Mischkristallisate verwendet werden, wie sie für den Korrosionsschutz von Eisen-oberflächen ist der DE-A-28 49 712, der DE-A-29 16 029 und der DE-A-29 40 695 beschrieben werden, wobei auch die dort angegebenen Mengenverhältnisse besonders geeignet sind. Beispielsweise ist eine homogene Mischung und/oder ein Mischkristallisat von Calciumhydrogenphosphat-dihydrat und Magnesiumhydrogenphosphat-trihydrat im Verhältnis 9:1. Bevorzugt liegt ein Korngrößenanteil von 55 Gew.-% im Bereich von bis zu 5 µm. Die Gesamtrezeptur enthält bevorzugt etwa 2 - 50 Gew.-% an Korrosionsschutzpigmenten.

Das vorstehende Korrosionsschutzpigment kann gegebenenfalls zusammen mit Zinkoxyd verwendet werden, wobei vorzugsweise der Mengenanteil Calciumhydrogenphosphat/Magnesiumhydrogenphosphat (Aktivpigment) zu Zinkoxyd im Bereich von etwa 1 bis 2,5 zu 3,5 bis 5,0 Gewichtsteilen liegt.

Die erfindungsgemäßen Beschichtungszusammensetzungen enthalten ein Bindemittel auf der Basis von Polyvinylbutyral und Phenolharz.

Als Polyvinylbutyrale kommen solche infrage, wie sie üblicherweise für Grundierungen, wie Wash-Primer, Einbrennlacke und Lacke für Metallfolien verwendet werden und im Handel üblich sind. Derartige Polyvinylbutyrale werden beispielsweise in dem Ringbuchblatt "Kunstharze für Industrielacke/Korrosionsschutz",Rubr. (11) Polyvinylbutyralharze, Hoechst, Ausgabe November 1981, beschrieben. Besonders geeignet sind beispielsweise Polyvinylbutyrale mit einem Erweichungsbereich gemäß DIN ISO 426 (Ring und Kugel) im Bereich von 150 bis 205°C, mit einem Restgehalt an Polyvinylacetat in der Größenordnung von 3 % und an Polyvinylalkohol in der Größenordnung von 12-21 %. Bevorzugt weisen sie eine dynamische Viskosität gemäß DIN 53 015 gemessen in 5 % n-Butanol bei 20°C im Bereich von 20 bis 80 mPa.s auf.

Als Phenolharze kommen solche vom nicht-plastifizierten härtbaren Typ, sowie auch solche vom nicht-härtbaren Novolaktyp infrage. Beispiele für den erstgenannten härtbaren Typ sind hitzehärtbare oder durch Säurekatalyse härtbare Phenolharze. Derartige Harze sind handelsüblich und werden beispielsweise für Lackierungen, Schutzüberzüge sowie Grundierungen verwendet. Beispiele für den hitzehärtbaren nicht-plastifizierten Phenolharztyp sind solche mit einer dynamischen Viskosität gemäß DIN 53 177/20°C von 3000-5000 mPa.s (75% in Butanol). Beispiele für solche säurehärtbaren Typ sind solche mit einer dynamischen Viskosität gemäß DIN 53 177/20°C von 500-650 mPa.s (70% in Butanol). Derartige Produkte sind beispielsweise im technischen Merkblatt "Kunstharze Hoechst" Ringbuch, "Kunstharze für Industrielacke/Korrosionsschutz" Rubr. (9) Phenolharze, Ausgabe November 1981, Phenodur PR 260 und Phenodur PR 263, beschrieben.

Bei den Phenolharzen vom Novolaktyp handelt es sich ebenfalls um handelsübliche Produkte, die als physikalisch trocknende Lacke, beispielsweise für Grundierungen, verwendet werden. Geeignet sind beispielsweise solche, die gut löslich in Ketonen, wie Aceton, Methylethylketon, Estern wie Ethylacetat, Butylacetat, Glycole, wie Ethylglycol, Butylglycol, und Alkoholen wie Ethanol und Butanol sind. Sie besitzen beispielsweise einen Schmelzpunkt gemäß Kapillarmethode DIN 53 181 von 110-120° C. Ein Beispiel für ein handelsübliches brauchbares Phenolharz vom Novolaktyp ist Alnovol PM 430.

Die erfindungsgemäßen Beschichtungszusammensetzungen können im Bindemittelbestandteil außer dem Polyvinylbutyral und dem Phenolharzbestandteil weitere Harzzusätze enthalten. Geeignet sind Epoxidharze, Nitrocellulose und Carbamidsäureester-Harze und gegebenenfalls Alkydharze, insbesondere Ricinenalkydharze.

Beispiele für geeignete Epoxidharze sind nicht modifizierte kalthärtende Epoxidharze, wie sie üblicherweise für kalthärtende Reaktionslacke, Klebstoffe, Pressmassen und Schichtpreßstoffe eingesetzt werden. Beispielsweise geeignet sind Epoxidharze mit einer dynamischen Viskosität gemäß DIN 53 015 bei 25°C (75% in Xylol) von 7000-10000 m.Pa.s mit einem Schmelzpunkt gemäß Kapillarmethode DIN 53 736 von 45-55°C, wie z.B. im Technischen Merkblatt "Kunstharze Hoechst", Ausgabe Mai 1984, als "Beckopox EP 301"® beschrieben.

Geeignete Nitrocellulosederivate sind beispielsweise Handelsprodukte, die als Lösungswolle bzw. Collodiumwolle bekannt sind.

Als Carbamidsäureester kommen solche infrage, wie sie üblicherweise als Plastifizierungskomponente für thermoplastische Bindemittel verwendet werden. Ein Beispiel für ein technisches Produkt weist eine dynamische Viskosität gemäß DIN 53 015, gemessen bei 23°C von 6000-12500 m.Pa.s auf.

Die erfindungsgemäßen Beschichtungszusammensetzungen können neben dem Bindemittel und Aktivpigment bzw. Zinkoxydbestandteil noch übliche Zusatzstoffe und Lackhilfsmittel, wie weitere Pigmente und Füllstoffe enthalten.

Zur Härtung wird ihnen Phosphorsäure (zum Beispiel technische Orthophosphorsäure, beispielsweise als 85 %-ige Lösung) in einer zur Hartung üblichen Menge zugesetzt. Die Menge dieses Härters, bezogen auf den Bindemittelfestkörper, beträgt dabei, bezogen auf das Gewicht, bevorzugt etwa 10 bis 20 %, insbesondere 15 %.

Mit den erfindungsgemäßen Beschichtungszusammensetzungen wird es möglich Aluminium und Aluminiumlegierungen auf der Basis zinktetraoxichromatfreier Produkte zu grundieren. Die erfindungsgemäßen Beschichtungszusammensetzungen ergeben den Vorteil, daß keine Probleme bei der Behandlung von Materialien auftreten, die in der Mischbauweise vorliegen, wie beispielsweise im Fahrzeugbau. Fahrzeuge auf der Basis von Aluminium in Kombination mit Stahl, verzinktem Stahl und Edelstahl können problemlos mit den erfindungsgemäßen Beschichtungszusammensetzungen grundiert werden. Bisher war dies nur mit zinkchromathaltigen Säureprimern möglich. Durch die Erfindung ergibt sich der Vorteil, daß eine ausgezeichnete Haftung und Elastizität der gebildeten Überzüge erzielt wird. Dabei treten selbst an Problemstellen, wie an Niet-, Nut- und Federstellen keine Blasenbildungen auf. Derartige Blasenbildungen konnten bisher häufig an Bordwänden und Aluminium-Kofferaufbauten festgestellt werden.

Es hat sich außerdem gezeigt, daß die Verarbeitungszeit (Topfzeit) der erfindungsgemäßen Zusammensetzungen denen der Zinktetraoxychromat/Zinkchromat enthaltenden entspricht.

Die folgenden Beispiele dienen zur Erläuterung der Erfindung.

### Beispiel 1

10,6 Gewichtsteile (GT) Äthanol und 15,0 GT Butanol werden in einem Dissolver (Rührwerk) vorgelegt und anschließend werden 6,3 GT Polyvinylbutyral (Handelsprodukt Mowital B 60 HH), 1,5 Gewichtsteile nicht härtbares Phenolharz vom Novolaktyp (Handelsprodukt Alnovol PN 430®) unter Rühren zugesetzt. Der Löseprozeß erstreckt sich über eine Zeitspanne von 30 Minuten. Hiernach erfolgt eine Kontrolle mittels Glasablauf, um festzustellen, ob die pulverförmigen, bzw. grob gemahlenen Harzkomponenten, auch vollständig gelöst sind. Sobald dies der Fall ist, werden 3,0 GT Epoxidharz (Handelsprodukt Epikote 1001® bzw. Beckopox EP 301®) (75 % in Xylol) und 15,0 GT Ethanol zugegeben, um eine für die Dispergierung optimale Viskosität einzustellen.

Im Anschluß daran werden unter Rühren die folgenden Komponenten eingestreut:

| | |
|---|---|
| 1,0 GT | pyrogenes Siliciumdioxid (vorwiegend hydrophob) |
| 2,2 GT | Talkum (mittlere Korngrößenverteilung 10 µm) |
| 2,2 GT | Dicalciumphosphat-dehydrat/Dimagnesiumphosphat-trihydrat, im Mengenverhältnis 9:1 |
| 3,8 GT | Titandioxyd vom Rutiltyp |
| 14,4 GT | Eisenoxidpigment |

Nach dem Einrühren mittels Dissover bei 21 m/s auf 40-50°C erreicht das Dispergiergut nach 15 Min. eine ausreichende Verteilung für die Sand- bzw. Perlmühle.

Anschließend wird das Dispergiergut mit Methylisobutylketon/Ethanol auf eine für die Weiterverarbeitung in der Sand-/Perlmühle geeignete Viskosität eingestellt; es werden 3,0 GT Methylisobutylketon zugesetzt.

Nunmehr erfolgt ein zweimaliger Mahlgang auf einer Sand- oder Perlmühle, wobei eine Temperatur von 60-70°C max. erreicht wird. Die Kornfeinheit beträgt 15 bis 20 µm. Nach der Abkühlung des Mahlgutes unter 30°C werden langsam unter Rühren 2,0 GT Xylol, 4,0 GT Methylisobutylketon und 11,7 GT kurzöliges, trocknendes Alkydharz (Ricinenalkydharz mit einem Ölgehalt von 30 %, Handelsprodukt Alftalat AR 300®), zugesetzt. Man erhält so eine homogene Substanz. Schließlich wird die Viskosität durch Zusatz von 4,0 GT Methylisobutylketon auf einen zur Lieferung geeigneten Wert eingestellt. Um ein Höchstmaß an Sauberkeit zu erzielen, kann eine Filtration über eine 50 µm Siebgaze vorgenommen werden.

Man erhält eine Produktstabilität von über einem Jahr.

### Herstellung der Härterlösung:

In einem Behälter mit Rührer, die aus Materialien hergestellt wurden, die durch Phosphorsäure nicht angegriffen werden, werden folgende Komponenten miteinander vermischt:
13,2 GT Ethanol, 13,0 GT Butanol, 13,0 GT Isopropanol, 37,0 GT Methylisobutylketon, 15,0 GT Butoxyl (Methoxybutylacetat) und 2,9 GT Xylol.

Gesondert werden 4,9 GT Phosphorsäure (85 %) in vollentsalztes Wasser langsam unter Rühren zugefügt. Die so hergestellte Phosphorsäurelösung wird in das vorstehende Lösungsmittelgemisch einfließen gelassen. Um eine optimale Reinheit zu erzielen, wird durch eine Siebgaze von 1 µm filtriert.

Die so erhaltene Härterlösung wird mit der vorstehend hergestellten Stammkomponente (Bindemittelgemisch, Korrosionspigment und übrige Substanzen) im Volumenverhältnis 1:1 vermischt.

Ein Aluminiumblech wird entfettet, anschließend angeschliffen und gereinigt und mit dem vorstehend hergestellten Aluprimer durch Spritzauftrag in einer Schichtstärke von 20 bis 25 µm beschichtet. Nach einer Lufttrocknung bei 20°C wird nach weiteren 30 Min. ein üblicher 2-Komponenten-Acrylfüller aufgetragen. (Schichtdicke etwa 30 µm pro Spritzgang). Nach weiteren 30 bis 60 Min. erfolgt eine Überarbeitung mit einem 2-Komponentendecklack. Nach anschließender Lufttrocknung und mehrtägiger Aushärtung bei 20°C erhält man einen Lackieraufbau von optisch einwandfreiem Aussehen.

Ein derartiger Lackieraufbau hat sich im Salzsprühtest und Feucht-Warm-Test (Tropentest) als äußerst beständig erwiesen. Die Beständigkeitswerte sind den Werten vergleichbar, die unter Verwendung konventioneller Zinktetraoxichromat-/Zinkchromatpigmente erhalten werden. Es zeigte sich somit, daß erfindungsgemäß Beschichtungszusammensetzungen bereitgestellt werden, die eine ausgezeichnete Haftung und Elastizität auf Aluminiumsubstraten aufweisen und einen hervorragenden Korrosionsschutz liefern. Es wurde somit eine in physikalischen Eigenschaften und Korrosionseigenschaften sehr günstige Alternative zu den bisherigen toxischen Beschichtungsmitteln für Aluminium bereitgestellt.

In einem Dissolver werden 43 GT Isobutanol vorgelegt und unter Rühren werden 8,3 GT Polyvinylbutyral (Mowital B 30 H®) eingestreut. Nachdem das Harz vollständig gelöst ist, werden unter Rühren die folgenden Komponenten eingebracht:

| | |
|---|---|
| 0,6 GT | Fettalkoholsulfonat (als Netzmittel zur Bodensatzverhütung) |
| 3,5 GT | Zinkoxid |
| 1,1 GT | Dicalciumphosphat-dihydrat/Dimagnesiumphosphat-trihydrat (9:1) |
| 3,1 GT | pyrogenes Siliciumdioxid |
| 6,2 GT | Talkum (mittlere Korngrößenverteilung 10 µm) |
| 6,2 GT | Eisenoxidpigment |

Es wird bei 21 m/s auf 40-50°C 15 Min. dispergiert, anschließend erfolgt ein zweimaliger Mahlgang auf der Sand- bzw. Perlmühle, wobei eine Korngröße von 15-20 µm erhalten wird.

Anschließend werden 4,5 GT nicht plastifiziertes härtbares Phenolharz (mit einem Gehalt an freiem Phenol von etwa 4 %, Phenodur PR 263/70) zugegeben und der Ansatz wird auf unter 30°C abgekühlt.

Danach wird eine separat hergestellte Lösung von 20,0 GT n-Propanol und 1,7 GT Phosphorsäure (85 %) zugegeben, und der Ansatz wird durch Zugabe von 0,68 GT n-Propanol auf Lieferviskosität eingestellt und über eine Siebgaze von 70 µm filtriert.

Eine Beschichtung wie in Beispiel 1 beschrieben unter Verwendung der vorstehend hergestellten Beschichtungszusammensetzung führt ebenfalls zu physikalisch günstigen Eigenschaften und hinsichtlich der Korrosion ausgezeichneten Überzügen.

## Patentansprüche

1. Beschichtungszusammensetzung für Aluminium und Aluminiumlegierungen mit einem Bindemittel auf der Basis von Polyvinylbutyral und Phenolharz, dadurch gekennzeichnet, daß das Bindemittel 40 bis 60 Gew.-% Polyvinylbutyral und 60 bis 40 Gew.-% Phenolharz enthält, wobei sich die Gewichtsprozente von Polyvinylbutyral und Phenolharz auf 100 % addieren und daß 12 bis 50 Gew.-%, bezogen auf die Gesamtrezeptur, einer homogenen Mischung und/oder eines Mischkristallisats von Calciumhydrogenphosphat und Magnesiumhydrogenphosphat zusammen mit Zinkoxid als Korrosionsschutzpigment enthalten sind.

2. Beschichtungszusammensetzung für Aluminium und Aluminiumlegierungen mit einem Bindemittel auf der Basis von Polyvinylbutyral und Phenolharz, dadurch gekennzeichnet, daß das Bindemittel 45 bis 55 Gew.-% Polyvinylbutyral, 20 bis 30 Gew.-% Phenolharz, 10 bis 15 Gew.-% Nitrocellulose und 5 bis 10 Gew.-% Carbamidsäureester enthält, wobei sich diese Prozentangaben auf 100 Gew.-% addieren, und 5 bis 30 Gew.-%, bezogen auf die Gesamtrezeptur einer homogenen Mischung und/oder eines Mischkristallisats von Calciumhydrogenphosphat und Magnesiumhydrogenphosphat und Zinkoxid als Korrosionsschutzpigment enthalten sind.

3. Beschichtungszusammensetzung nach Anspruch 2, dadurch gekennzeichnet, daß das Phenolharz ein nicht plastifiziertes, härtbares Phenolharz ist.

4. Beschichtungszusammensetzung für Aluminium und Aluminiumlegierungen mit einem Bindemittel auf der Basis von Polyvinylbutyral und Phenolharz, dadurch gekennzeichnet, daß das Bindemittel 53 bis 61,5 Gew.-% Polyvinylbutyral, 12 bis 15,5 Gew.-% Phenolharz und 18 bis 23 Gew.-% Epoxidharz enthält, wobei sich diese Prozentangaben auf 100 Gew.-% addieren und 2 bis 5 Gew.-%, bezogen auf die Gesamtrezeptur, einer homogenen Mischung und/oder eines Mischkristallisats von Calciumhydrogenphosphat und Magnesiumhydrogenphosphat als Korrosionsschutzpigment enthalten sind.

5. Beschichtungszusammensetzung nach einem der Ansprüche 2 oder 4, dadurch gekennzeichnet, daß das Korrosionsschutzigment 1 Gewichtsteil eines homogenen Gemischs oder Mischkristallisats von Calciumhydrogenphosphat und Magnesiumhydrogenphosphat im Gewichtsverhältnis 9 : 1 und 3 Gewichtsteile Zinkoxid enthält.

6. Beschichtungszusammensetzung für Aluminium und Aluminiumlegierungen mit einem Bindemittel auf der Basis von Polyvinylbutyral und Phenolharz, dadurch gekennzeichnet, daß das Bindemittel 35 bis 40 Gew.-% Polyvinylbutyral, 8 bis 10 Gew.-% Phenolharz, 12 bis 15 Gew.-% Epoxidharz und 40 bis 45 Gew.-% Alkydharz enthält, wobei sich diese Prozentangaben auf 100 % addieren, und 2 bis 5 Gew.-%, bezogen auf die Gesamtrezeptur, einer homogenen Mischung und/oder eines Mischkristallisats von Calciumhydrogenphosphat und Magnesiumhydrogenphosphat als Korrosionsschutzpigment enthalten sind.

7. Beschichtungszusammensetzung nach Anspruch 6, dadurch gekennzeichnet, daß das Phenolharz ein Novolak-Harz ist.

8. Verwendung der Beschichtungszusammensetzung gemäß einem der Ansprüche 1 bis 7 zur Beschichtung, insbesondere Grundierung, von Aluminium und Aluminiumlegierungen.

## Claims

1. A coating composition for aluminium and aluminium alloys, comprising a binder based on polyvinyl butyral and phenolic resin, characterised in that the binder contains 40 to 60% by weight of polyvinyl butyral and 60 to 40% by weight of phenolic resin, the percentages by weight of polyvinyl butyral and phenolic resin adding up to 100%, and an anti-corrosive pigment is present in the form of 12 to 50% by weight relative to the total formulation of a homogeneous mixture and/or mixed crystals of calcium hydrogen phosphate and magnesium hydrogen phosphate together with zinc oxide.

2. A coating composition for aluminium and aluminium alloys comprising a binder based on polyvinyl butyral and phenolic resin, characterised in that the binder contains 45 to 55% by weight of polyvinyl butyral, 20 to 30% by weight of phenolic resin, 10 to 15% by weight of nitrocellulose and 5 to 10% by weight of carbamate, wherein these percentages add up to 100% by weight, and an anti-corrosive pigment is present in the form of 5 to 30% by weight relative to the total formulation of a homogeneous mixture and/or mixed crystals of calcium hydrogen phosphate, magnesium hydrogen phosphate and zinc oxide.

3. A coating composition according to claim 2, characterised in that the phenolic resin is a non-plasticised thermosetting phenolic resin.

4. A coating composition for aluminium and aluminium alloys comprising a binder based on polyvinyl butyral and phenolic resin, characterised in that the binder contains 53 to 61.5% by weight of polyvinyl butyral, 12 to 15.5% by weight of phenolic resin and 18 to 23% by weight of epoxy resin, wherein these percentages add up to 100% by weight, and an anti-corrosive pigment is present in the form of 2 to 5% by weight relative to the total formulation of a homogeneous mixture and/or mixed crystals of calcium hydrogen phosphate and magnesium hydrogen phosphate.

5. A coating composition according to claim 2 or 4, characterised in that the anti-corrosive pigment contains 1 part by weight of a homogeneous mixture or mixed crystals of calcium hydrogen phosphate and magnesium hydrogen phosphate in the ratio of 9 : 1 by weight and 3 parts by weight of zinc oxide.

6. A coating composition for aluminium and aluminium alloys comprising a binder based on polyvinyl butyral and phenolic resin, characterised in that the binder contains 35 to 40% by weight of polyvinyl butyral, 8 to 10% by weight of phenolic resin, 12 to 15% by weight of epoxy resin and 40 to 45% by weight of alkyd resin, wherein these percentages add up to 100%, and an anti-corrosive pigment is present in the form of 2 to 5% by weight relative to the total formulation of a homogeneous mixture and/or mixed crystals of calcium hydrogen phosphate and magnesium hydrogen phosphate.

7. A coating composition according to claim 6, characterised in that the phenolic resin is a novolak resin.

8. Use of the coating composition according to any of claims 1 to 7 for coating, more particularly priming, aluminium and aluminium alloys.

## Revendications

1. Composition de revêtement pour aluminium et alliages d'aluminium ayant un liant à base de polyvinylbutyral et de résine phénolique, caractérisée en ce que le liant contient 40 à 60% en poids de polyvinylbutyral et 60 à 40% en poids de résine phénolique, la somme des pourcentages en poids de polyvinylbutyral et de résine phénolique étant de 100%, et qu'elle contient 12 à 50% en poids, par rapport à la formulation globale, d'un mélange homogène et/ou d'un produit de cristallisation mixte d'hydrogénophosphate de calcium et d'hydrogénophosphate de magnésium conjointement avec de l'oxyde de zinc en tant que pigment anticorrosion.

2. Composition de revêtement pour aluminium et alliages d'aluminium ayant un liant à base de polyvinylbutyral et de résine phénolique, caractérisée en ce que le liant contient 45 à 55% en poids de polyvinylbutyral, 20 à 30% en poids de résine phénolique, 10 à 15% en poids de nitrocellulose et 5 à 10% en poids d'ester d'acide carbamique, la somme de ces pourcentages étant de 100%, et 5 à 30% en poids, par rapport à la formulation globale, d'un mélange hommogène et/ou d'un produit de cristallisation mixte d'hydrogénophosphate de calcium et d'hydrogénophospbate de magnésium et d'oxyde de zinc en tant que pigment anticorrosion.

3. Composition de revêtement selon la revendication 2, caractérisée en ce que la résine phénolique est une résine phénolique durcissable, non-plastifiée.

4. Composition de revêtement pour aluminium et alliages d'aluminium ayant un liant à base de polyvinylbutyral et de résine phénolique, caractérisée en ce que le liant contient 53 à 61,5% en poids de polyvinylbutyral, 12 à 15,5% en poids de résine phénolique et 18 à 23% en poids de résine époxy, la somme de ces pourcentages étant de 100% en poids, et 2 à 5% en poids, par rapport à la formulation globale, d'un mélange hommogène et/ou d'un produit de cristallisation mixte d'hydrogénophosphate de calcium et d'hydrogénophosphate de magnésium en tant que pigment anticorrosion.

5. Composition de revêtement selon l'une des revendications 2 ou 4, caractérisée en ce que le pigment anticorrosion contient 1 partie en poids d'un mélange homogène ou d'un produit de cristallisation mixte d'hydrogénophosphate de calcium et d'hydrogénophosphate de magnésium dans le rapport en poids de 9:1 et 3 parties en poids d'oxyde de zinc.

6. Composition de revêtement pour aluminium et alliages d'aluminium ayant un liant à base de polyvinylbutyral et de résine phénolique, caractérisée en ce que le liant contient 35 à 40% en poids de polyvinylbutyral, 8 à 10% en poids de résine phénolique, 12 à 15% en poids de résine époxy et 40 à 45% en poids de résine alkyde, la somme de ces pourcentages étant de 100%, et 2 à 5% en poids, par rapport à la formulation globale, d'un mélange hommogène et/ou d'un produit de cristallisation mixte d'hydrogénophosphate de calcium et d'hydrogénophosphate de magnésium en tant que pigment anticorrosion.

7. Composition de revêtement selon la revendication 6, caractérisée en ce que la résine phénolique est une résine novolaque.

8. Utilisation de la composition de revêtement selon l'une quelconque des revendications 1 à 7 pour le revêtement, en particulier comme apprêt ou couche de fond, d'aluminium et d'alliages d'aluminium.
